# EUROPEAN PATENT APPLICATION

(11) **EP 1 350 646 A2**
(43) Date of publication of application: **08.10.2003**
(21) Application number: 03006826.6
(22) Date of filing: 27.03.2003
(51) Int. Cl.: B60H 1/00, B60H 1/34

(54) **Vehicle air conditioner having diffuse ventilation mode**

(30) Priority: 02.04.2002 JP 2002100325
(71) Applicant: Denso Corporation, Kariya-city, Aichi-pref., 448-8661 (JP)
(72) Inventor: Kamiya, Tomohiro, Denso Corporation, Aichi-pref. 448-8661 (JP); Shikata, Kazushi, Denso Corporation, Aichi-pref. 448-8661 (JP)
(74) Representative: Klingseisen, Franz, Dipl.-Ing.

(57) **Abstract**

In a vehicle air conditioner controls the air-conditioning, a face duct 4 is branched off to lead the conditioned air to a diffuse ventilation blow-out port 6. A mode door 7 is activated to select a blow-out mode from a face mode, a diffuse ventilation mode and a face-diffuse mode based on a target blowing temperature TAO. The face mode is preferably selected when the local cooling is required. The face-diffuse mode is preferably selected when the rapid cooling is required. The diffuse ventilation mode is preferably selected when the moderate cooling is required.

## Description

The present invention relates to a vehicle air conditioner which has a diffuse ventilation mode so that air is diffused through a diffuse ventilation blow-out port which is located at an upper portion of a dashboard in a vehicle.

U.S. Patent No. 5,620,366 discloses an air conditioner, such as the one described above, which can blow out air through the diffuse ventilation blow-out port located near a defroster blow-out port.

The patent described above does not disclose a relationship between different blow-out modes, i.e. , a face mode and a diffuse ventilation mode.

An object of the invention is to provide an improved vehicle air conditioner that performs air-conditioning desired by a passenger.

One aspect of the present invention is to provide a new blow-out mode, i.e., a face-diffuse mode in air-conditioning so that the conditioned air can be blown out from a face blow-out port and a diffuse ventilation blow-out port simultaneously.

Preferably, a face mode or a diffuse mode in the air-conditioning is selected in relation to a target blowing temperature of the conditioned air.

Another aspect of the present invention is to provide an instrument panel (1) which has a top portion having a surface (1a) in which plural small holes are formed. The small holes may serve for diffusing the conditioned air therethrough. Means for equalizing the conditioned air blown out from the small holes may be provided in the air conditioning unit.

Other features and advantages of the present invention will become more apparent from the following detailed description made with reference to the accompanying drawings.

FIG. 1A is an elevation view, from a passenger's side, illustrating an instrumental panel in a first embodiment of the present invention;

FIG. 1B is an upper surface view illustrating the instrumental panel in the first embodiment of the present invention;

FIG. 2 is a cross-sectional view illustrating an air conditioning apparatus at its center part in a lateral (width) direction of a vehicle in the first embodiment of the present invention;

FIG. 3 is an elevation view illustrating a branch duct of the air conditioning apparatus in the first embodiment of the present invention;

FIG. 4 is an oblique perspective view illustrating mode doors of the air conditioning apparatus in the first embodiment of the present invention;

FIG. 5 is an oblique perspective view illustrating the branch duct of the air conditioning apparatus in the first embodiment of the present invention;

FIG. 6 is a cross-sectional view illustrating the branch duct of the air conditioning apparatus in the first embodiment of the present invention;

FIGS. 7A through 7D are views illustrating a process for assembling the mode doors to the branch duct and a face duct in the first embodiment of the present invention;

FIG. 8 is a diagram illustrating a part of an air conditioning system in the first embodiment of the present invention;

FIGs. 9A to 9C are cross-sectional views illustrating a face mode, a face-diffuse mode and a diffuse mode, respectively;

FIG. 10 is a graph showing a control characteristic based on a target blowing temperature TAO of the air conditioning apparatus in the first embodiment of the present invention;

FIG. 11 is a table showing a control pattern of the air conditioning apparatus in the first embodiment of the present invention;

FIG. 12 is an elevation view illustrating a branch duct of the air conditioning apparatus in a second embodiment of the present invention;

FIG. 13 is an elevation view illustrating a branch duct of the air conditioning apparatus in a third embodiment of the present invention;

FIG. 14 is an elevation view illustrating a branch duct of the air conditioning apparatus in a fourth embodiment of the present invention; and

FIG. 15 is a cross-sectional view illustrating an air conditioning apparatus at its center part in a lateral (width) direction of a vehicle in the first embodiment of the present invention.

Specific embodiments of the present invention will now be described hereinafter with reference to the accompanying drawings in which the same or similar component parts are designated by the same or similar reference numerals.

### (First Embodiment)

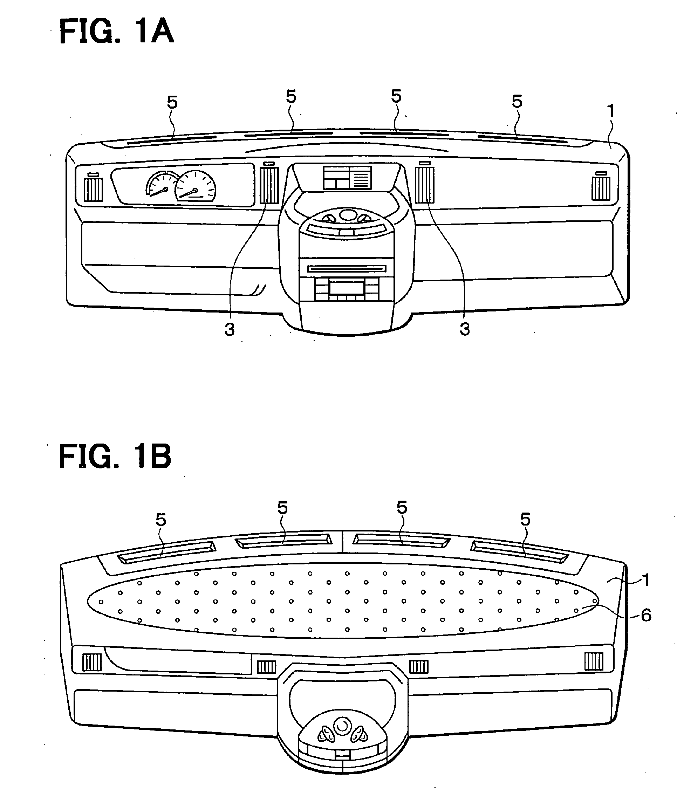

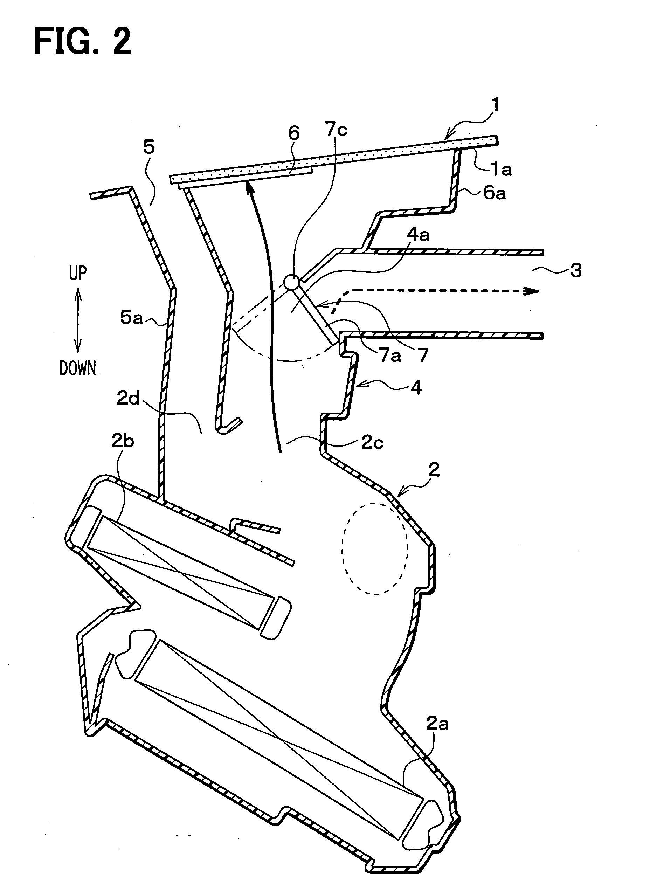

A schematic ventilation system in which air is blown toward a passenger compartment of a vehicle will be described with reference to Figs. 1A, 1B and 2.

An instrument panel is an industrial design panel which extends toward a lateral (width) direction of a vehicle and is arranged at a front side in the passenger compartment of the vehicle so as to be located close to a windshield. An air conditioning unit 2, such as the one shown in Fig.2, is arranged at substantially the center part of the instrument panel 1 in the lateral direction of the vehicle.

As well known, the air conditioning unit 2 is a casing which includes an air conditioning portion having an evaporator 2a, a heater core 2b, an air-mix door and the like, and a mode switching portion for switching a blow-out mode of air blown out from the air conditioning portion. Usually, a blower unit for blowing air by means of a blower fan toward the air conditioning unit is located at a passenger seat side.

At an upper side of the air conditioning unit 2, a face opening 2c and a defroster opening 2d are provided. The face opening communicates with a face duct 4 which is connected to a face blow-out port 3 through which the conditioned air is blown toward an upper body of a passenger. The defroster opening 2d communicates with a defroster duct 5a which is connected to a defroster blow-out port 5 through which the conditioned air is blown toward the windshield to remove the condensed water on the windshield.

At a lower side of the air conditioning unit 2, a foot opening is provided through which the conditioned air is blown toward at least a lower body of the passenger.

In substantially an entire area of an upper part of the instrument panel 1, a diffuse ventilation blow-out port 6 is provided to diffuse the conditioned air therethrough. In this embodiment, a number of small holes (micro holes) are formed in a surface portion 1a of the upper part of the instrument panel 1 to constitute the diffuse ventilation blow-out port 6. The surface portion 1a may be made of artificial (synthetic) leather or natural leather.

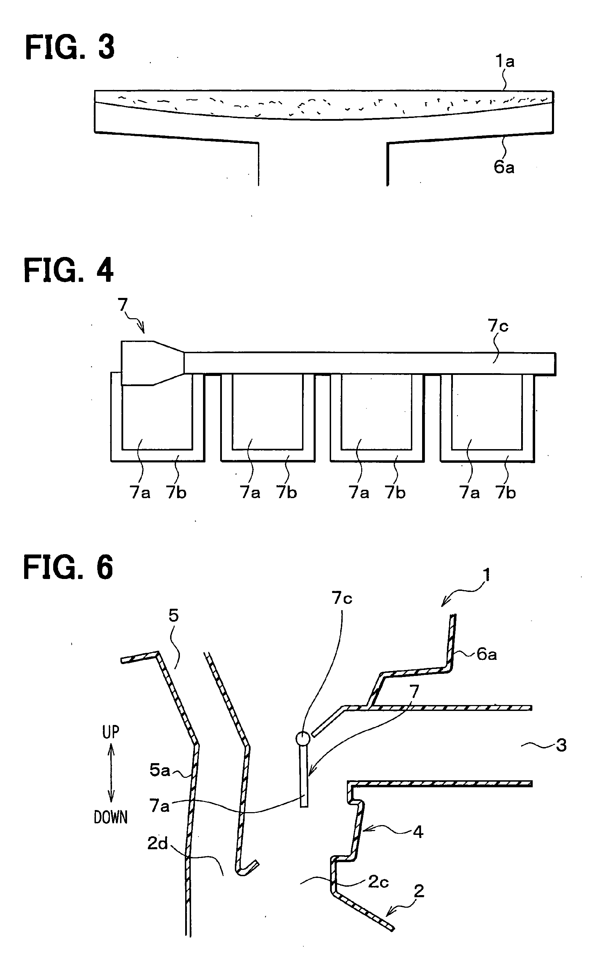

The thickness of the surface portion 1a at its center part in the lateral direction of the vehicle is different from that at its peripheral portion in the lateral direction of the vehicle so as to be thickened toward the center part as shown in Fig. 3. The surface portion 1a having this feature serves as blow-out air uniform means for adjusting the stream of the air blown out from the surface portion 1a so that the conditioned air is blown out uniformly over the entire area of the diffuse ventilation blow-out port 6.

As shown in Fig. 2, a branch portion 4a is connected to the face duct 4 serving as an air passage to lead a part of the conditioned air, which comes through the face opening 2c, to the diffuse ventilation blow-out port 6. A mode door 7 is provided at the branch portion 4a to adjust the stream of the conditioned air which flows to the face blow-out port 3 and the diffuse ventilation blow-out port 6.

As shown in Fig. 4, the door 7 has a door body 7a, a packing (gasket) 7b which is integrated to the door body 7a at a peripheral portion of the door body 7a and is made from an elastic deformable elastomeric material, and a rotatable shaft 7c. In this embodiment, plural door bodies 7a are connected to the rotatable shaft 7c which extends in the lateral direction of the vehicle.

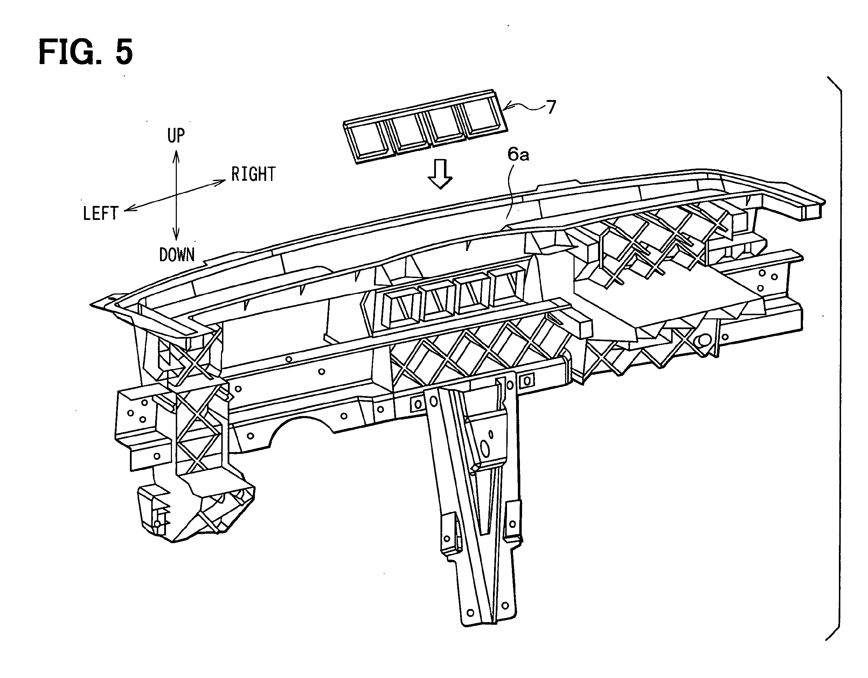

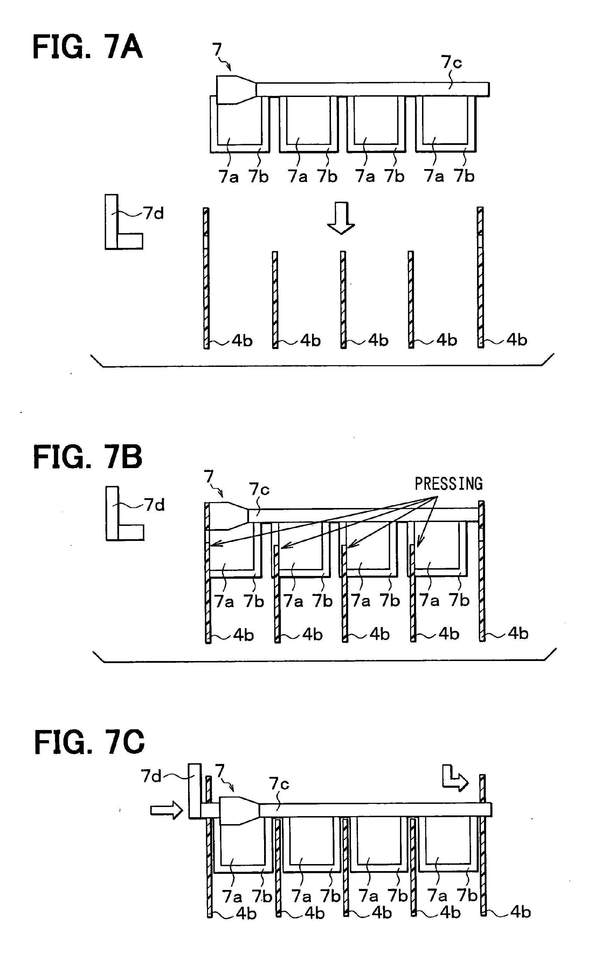

As shown in Figs. 5 and 6, the mode door 7 is inserted and assembled to the branch portion 4a from an upper portion of the branch portion 4a. The packing 7b can hermetically seal the air passage at the face duct 4 by contacting an inner wall of the face duct 4 so as to adjust the stream of the conditioned air.

A branch duct 6a is connected to the branch portion 4a to lead the conditioned air toward the diffuse ventilation blow-out port 6. In this embodiment, the branch duct 6a is formed so that its end portion is enlarged to fit the surface portion 1a as shown in Fig. 3. In this embodiment, the branch duct 6a, the face duct 4, a defroster duct 5a and a reinforcing bar are integrated in one body by a molding process.

When assembling the mode door 7, the mode door 7 is inserted to the branch portion 4a from the upper side thereof as shown in Fig. 7A. Then, the packing 7c is pressed against a partition plate 4b as shown in Fig. 7B. While pressing the packing 7c as shown in Fig. 7B, the mode door 7 is slightly shifted in the lateral direction. Then, a linking lever 7d is attached to the rotatable shaft 7c as shown in Fig. 7C.

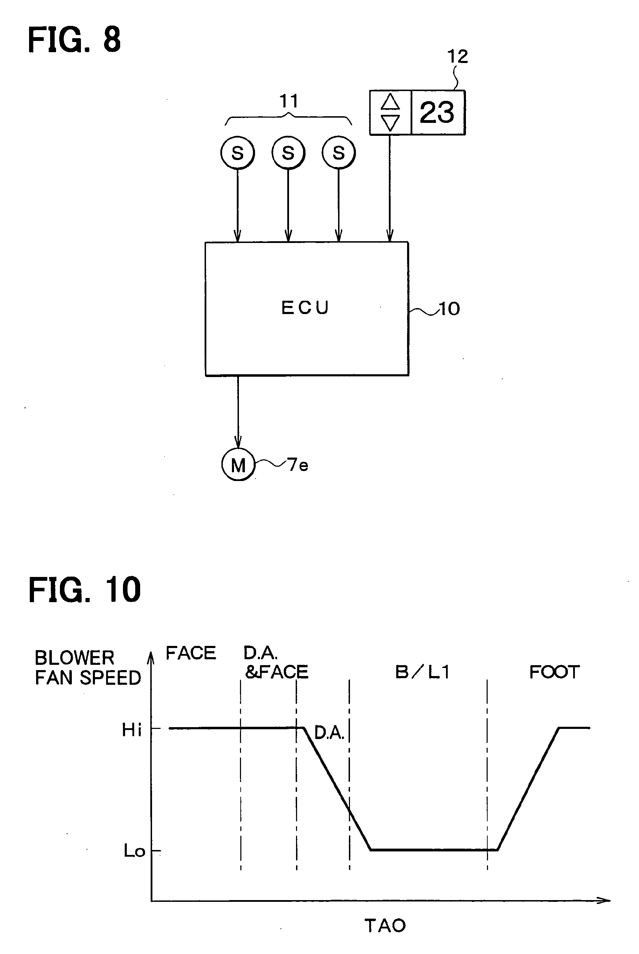

As shown in Fig. 8, various signals are input to an electric control unit 10 from air conditioning sensors 11 for detecting information such as an inside air temperature, an outside air temperature and a sunlight amount which are necessary to perform the air conditioning, and from a temperature setting panel 12 in which the passenger manually sets his/her desirable temperature in a passenger compartment. The electric control unit 10 calculates a target blowing temperature TAO, which is well known, based on the input signals, and controls a servo motor 7e for driving the mode door 7, a servo motor for driving an air-mix door (not shown), an electro magnetic clutch or the like based on the calculated TAO.

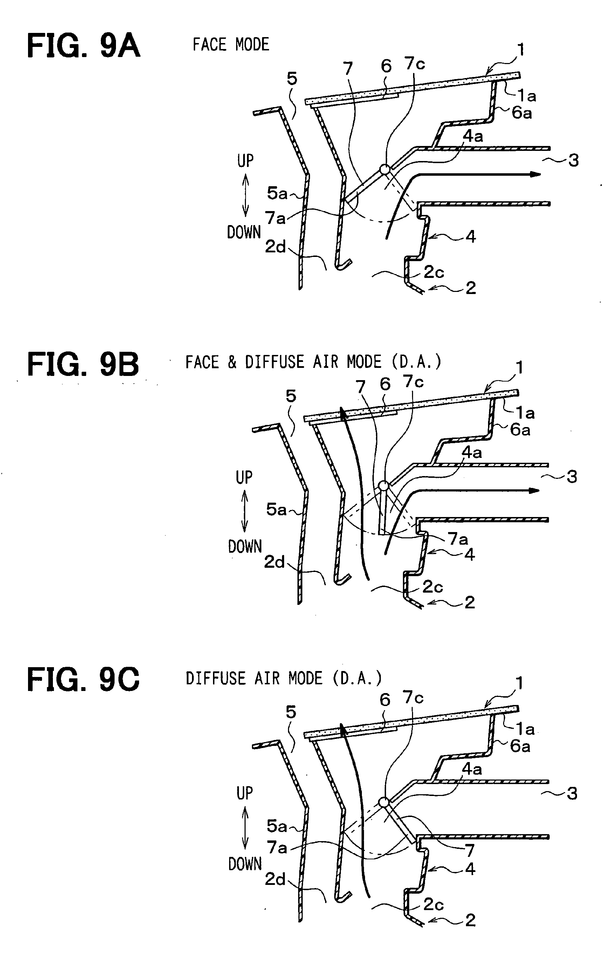

In this embodiment, various modes can be selected by controlling the opening degree of the mode door 7, such as a FACE mode in which the conditioned air is blown into the passenger compartment through the face blow-out port 3, a FACE & DIFFUSE AIR mode in which the conditioned air is blown into the passenger compartment through the face blow-out port 3 and the diffuse ventilation blow-out port 6, and a DIFFUSE AIR mode in which the conditioned air is blown into the passenger compartment through the diffuse ventilation blow-out port 6. Figs. 9A to 9C show a respective modes described above. Arrows in Figs. 9A to 9C show the stream of the conditioned air.

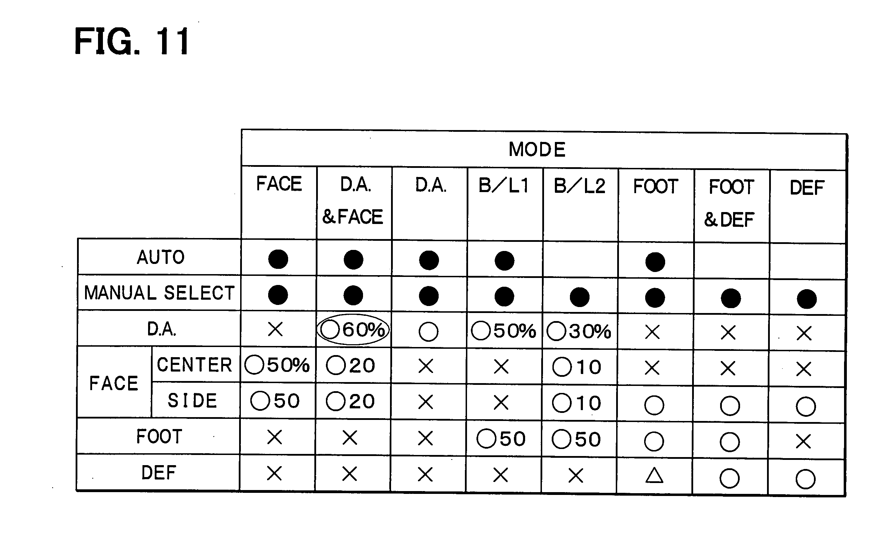

The electric control unit 10 determines the blow-out mode from various blow-out modes including the above-mentioned three blow-out modes based on the target blowing temperature TAO as shown in Fig. 10, and activates blow-out mode doors including the mode door 7 to achieve the selected blow-out mode.

A table in Fig. 11 shows one example pattern of blow-out modes in this embodiment. The symbol "•" in this table is a selectable blow-out mode in this embodiment. The symbol"o" in the table means that an air-blow opening provided in the air conditioning unit 2, such as the face opening 2c and the defroster opening 2d and the like, is open. A numeral beside the symbol"o" denotes the opening degree. In a case where there is no numeral beside the symbol"o", the opening degree is 100%. The symbol "×" in the table denotes that the air-blow opening is closed. For example, in a mode shown an area enclosed with an elliptic line in the table, the FACE-DIFFUSE AIR mode is selected and the opening degree at a side of the diffuse ventilation blow-out port 6 is 60%.

In this embodiment, the blow-out mode, which satisfies the desire of the passenger, can be selected by performing, for example, the FACE mode when local cooling is required, the FACE-DIFFUSE AIR mode when rapid cooling in the passenger compartment is required and the DIFFUSE AIR mode when moderate cooling is required.

In this embodiment, the electric control unit 10 can automatically control the air conditioning based on the target blowing temperature TAO, so that the air conditioning is performed comfortably without frequent operation of the air conditioning apparatus by the passenger. The detailed description for automatic air conditioning control is omitted to be described because it is well known in the art.

### (Second Embodiment)

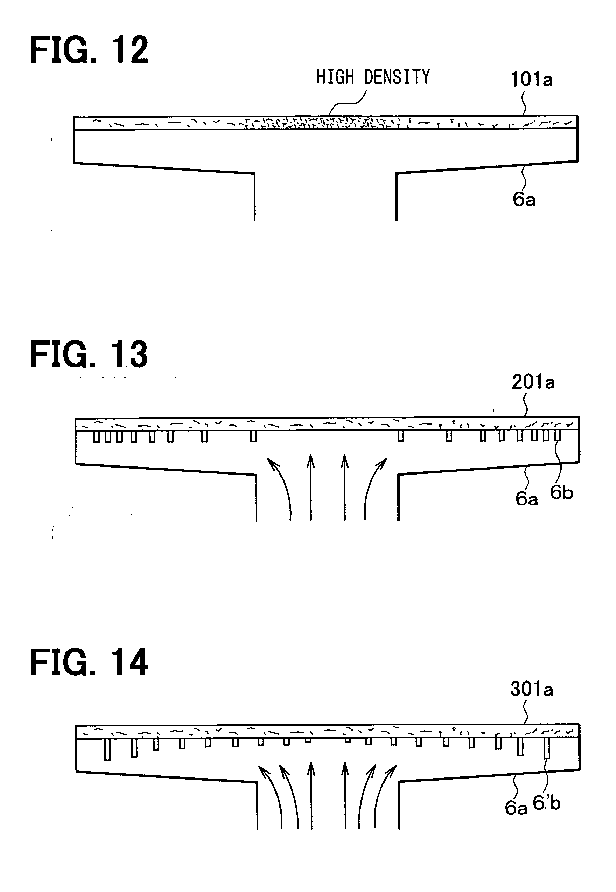

In this embodiment, a surface portion 101a is employed as the blow-out air uniform means for adjusting the stream of air blown out from the surface portion 101a so that the conditioned air is blown out uniformly over the entire area of the diffuse ventilation blow-out port 6. The surface portion 101a has a different density in the lateral (width) direction of the vehicle so that the pressure loss of the air is greater at the center part of the surface portion 101a than that at the peripheral portion of the surface portion 101a as shown in Fig. 12.

### (Third Embodiment)

In this embodiment, a surface portion 201a is employed as the blow-out air unifying means for adjusting the stream of air blown out from the surface portion 201a so that the conditioned air is blown out uniformly over the entire area of the diffuse ventilation blow-out port 6. The surface portion 201a has plural protrusions 6b on its surface at an upstream side of the diffuse ventilation blow-out port 6. Moreover, a gap between an adjacent protrusions 6b at the center part of the surface portion 201a in the lateral direction of the vehicle is larger than that at the peripheral part of the surface portion 201a as shown in Fig. 13.

### (Fourth Embodiment)

In this embodiment, like the third embodiment, a surface portion 301a has plural protrusions 6'b on its surface at an upstream side of the diffuse ventilation blow-out port 6 to equalize (uniformize) the blow-out air from the whole area of the diffuse ventilation blow-out port 6. Moreover, a size in height of the protrusion 6b is higher at the center part of the surface portion 301a in the lateral direction of the vehicle than that at the peripheral part of the surface portion 301a as shown in Fig. 14 to achieve the similar effect described above.

In the above-described other embodiments, the thickness of the surface portion 101a, 201a, or 301a may be the same in the lateral direction of the vehicle as shown in the figures.

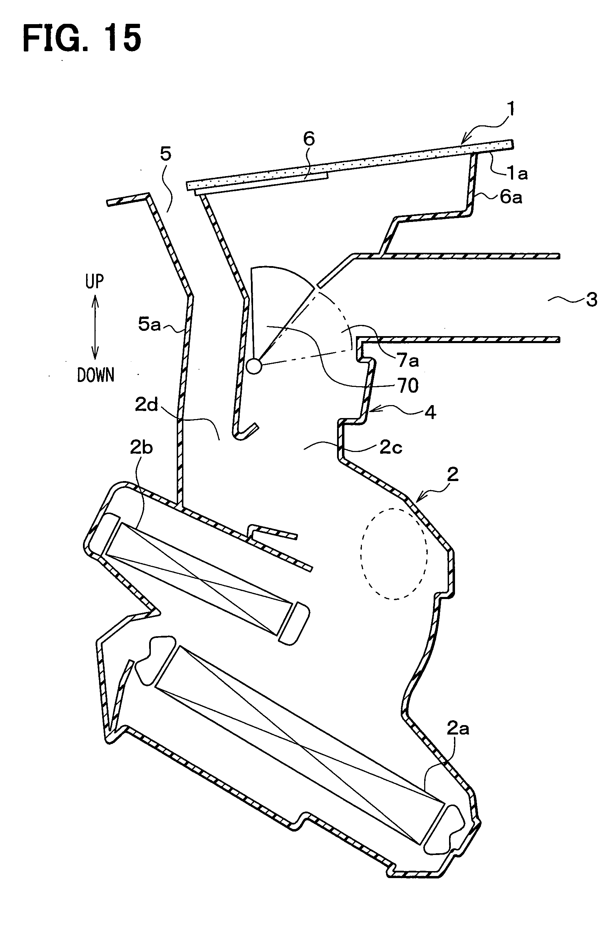

Although the mode door 7 is a panel door in the above-described embodiments, the other type of a door can be employed such as a rotary door 70 shown in Fig. 15, a film door for adjusting the opening degree by moving a thin film.

Although the small holes are formed in the surface portion 1a, 101a, 201a or 301a to provide the diffuse ventilation in the diffuse ventilation blow-out port 6, other structures or ways may be employed to obtain the diffuse ventilation at the instrument panel.

Although the electric control unit 10 automatically selects the blow-out mode based on the target blowing temperature TAO in the above-described embodiments, the blow-out mode can be selected by means of a well-known selector switch (a push switch, a rotatable switch or the like).

While the present invention has been shown and described with reference to the foregoing preferred embodiment, it will be apparent to those skilled in the art that changes in form and detail may be therein without departing from the scope of the invention as defined in the appended claims.

## Claims

1. A vehicle air conditioner comprising:
an air conditioning unit (2) conditioning air blown into a passenger compartment;
a face blow-out port (3) from which the air conditioned in said air conditioning unit is blown toward an upper body of a passenger; and
a diffuse ventilation blow-out port (6) provided in an entire part of an upper portion of an instrument panel (1), wherein:
said air conditioning unit has at least a face mode in which the conditioned air is blown into the passenger compartment from the face blow-out port, a diffuse ventilation mode in which the conditioned air is blown into the passenger compartment from said diffuse ventilation blow-out port, and a face-diffuse mode in which the conditioned air is blown into the passenger compartment from the face blow-out port and the diffuse ventilation blow-out port.

2. A vehicle air conditioner according to claim 1, further comprising selecting means (10) for selecting one blow-out mode from the face mode, the diffuse ventilation mode and the face-diffuse mode based on a target temperature of the conditioned air blown into the passenger compartment.

3. A vehicle air conditioner according to claim 1, further comprising means for substantially equalizing the stream of the air blown out from said entire part of the upper portion of the instrument panel through said diffuse ventilation blow-out port.

4. A vehicle air conditioner comprising:
an air conditioning unit (2) conditioning air blown into a passenger compartment;
a face blow-out port (3) from which the air conditioned in said air conditioning unit is blown toward an upper body of a passenger;
a diffuse ventilation blow-out port (6) provided in an entire part of an upper portion of an instrument panel from which the air conditioned in said air conditioning unit is blown into the passenger compartment;
an air passage (4) provided between said air conditioning unit and said face blow-out port;
a branch portion (4a) communicating said air passage with said diffuse ventilation blow-out port; and
a door portion (7) provided at said branch portion to adjust the stream of the conditioned air.

5. A vehicle air conditioner according to claim 4, wherein said door has a door body (7a) and an elastic portion (7b) provided at a periphery of said door body, wherein said elastic portion is made of an elastomeric material which is capable of elastic deformation.

6. A vehicle air conditioner according to claim 5, wherein said door portion has a rotatable shaft (7c), which extends in a horizontal direction, by which said door body and elastic portion can rotate, wherein said door portion is assembled to said branch portion from an upper side thereof so that said rotatable shaft is located at an upper side of said door body.

7. A vehicle air conditioner according to claim 4, further comprising means for substantially equalizing the stream of the air blown out from said entire part of the upper portion of the instrument panel through said diffuse ventilation blow-out port.

8. A vehicle air conditioner according to claim 7, wherein said air conditioning unit is provided at substantially a center in a width direction of the vehicle, said equalizing means is formed so that pressure loss of the air is larger at its center in the width direction of the vehicle than that at its side in the width direction of the vehicle.

9. A vehicle air conditioner according to claim 7, wherein said instrument panel has a surface part (1a) at the upper portion thereof which has a plurality of small holes to constitute said diffuse ventilation blow-out port, wherein the thickness of said surface part is different in the width direction of the vehicle so as to serve as said equalizing means.

10. A vehicle air conditioner according to claim 7, wherein said instrument panel has a surface part (101a) at the upper portion thereof which has a plurality of small holes to constitute said diffuse ventilation blow-out port, wherein the density of said surface part is different in the width direction of the vehicle so as to serve as said equalizing means.

11. A vehicle air conditioner according to claim 7, wherein said air conditioning unit is provided at substantially a center in a width direction of the vehicle, wherein said equalizing means has a plurality of protrusions (6'b) extending toward an upstream side of the stream of the air, wherein height of said plurality of protrusions at a center in the width direction of the vehicle is higher than that at a side in the width direction of the vehicle.

12. A vehicle air conditioner according to claim 7, wherein said air conditioning unit is provided at substantially a center in a width direction of the vehicle, wherein said equalizing means has a plurality of protrusions (6b) extending toward an upstream side of the stream of the air, wherein a gap between adjacent protrusions of said plurality of protrusions at a center in the width direction of the vehicle is larger than that at a side in the width direction of the vehicle.
